# EUROPÄISCHE PATENTSCHRIFT

(11) **EP 1 923 598 B1**
(45) Veröffentlichungstag und Bekanntmachung des Hinweises auf die Patenterteilung: **20.07.2011**
(21) Anmeldenummer: 07020106.6
(22) Anmeldetag: 15.10.2007
(51) Int. Cl.: F16F 13/10

(54) **Hydrolager mit einer wellenförmigen Membran**
Hydrolayer with an undulatory membrane
Couche hydraulique dotée d'une membrane en forme d'ondes

(30) Priorität: 15.11.2006 DE 102006054110
(43) Veröffentlichungstag der Anmeldung: 21.05.2008
(73) Patentinhaber: Carl Freudenberg KG, 69469 Weinheim (DE)
(72) Erfinder: Beckmann, Wolfgang, 64289 Darmstadt (DE); Farrenkopf, Peter, 68519 Viernheim (DE); Lobmüller, Günther, 69509 Mörlenbach (DE); Holz, Roland, 64658 Fürth (DE); Bernhard, Petra, 69469 Weinheim (DE)

(56) Entgegenhaltungen:
- EP-A- 0 072 262
- EP-A- 0 262 296
- EP-A- 0 331 951
- DE-A1- 4 233 240
- DE-C1- 4 027 826
- US-A- 4 742 999

## Beschreibung

### Technisches Gebiet

Die Erfindung betrifft ein Hydrolager zur Verwendung bei Kraftfahrzeugen mit einer Elastomerfeder sowie einer ersten Kammer und einer zweiten Kammer, die mit einem Fluid gefüllt durch eine aus zwei Düsenscheiben bestehende Trennwand mit einem Dämpfungskanal getrennt sind, wobei zwischen die Düsenscheiben eine wellige elastische Membran positioniert ist.

### Stand der Technik

Derartige Hydrolager sind aus dem Stand der Technik bereits bekannt. Hydrolager finden insbesondere in Kraftfahrzeugen Verwendung, welche mit Verbrennungsmotoren betrieben werden. Sie dienen der Dämpfung von Schwingungen des Verbrennungsmotors. Die Schwingungen des Verbrennungsmotors sollen von der Karosserie des Kraftfahrzeugs entkoppelt werden. Überlicherweise bedämpfen Hydrolager Schwingungen im Bereich zwischen 5 und 15 Hz und isolieren Schwingungen über 15 Hz.

Zur wirkungsvollen Dämpfung von Schwingungen werden Membranen in Hydrolagern entweder frei beweglich oder fest zwischen zwei Düsenscheiben angeordnet. Ein optimiertes Hydrolager zeigt eine geringe dynamische Steifigkeit der Membran, wobei die Membran des Weiteren eine hohe Dämpfung von fahrbahnerregten Schwingungen bewirkt.

In der DE 198 43 558 A1 ist ein Hydrolager dargestellt, bei dem die Membran mit Spiel zwischen den Düsenscheiben eingefügt ist. Um die bei dieser Ausführungsform auftretenden Klappergeräusche zu vermeiden, ist die Membran über einen Teil ihrer Oberfläche uneben ausgebildet, z.B. auch durch eine Welligkeit. Insgesamt entspricht dieses Hydrolager dem eines entkoppelten Hydrolagers.

Bei den gattungsbildenden Hydrolagern ist jedoch problematisch, dass eine zwischen den Düsenscheiben fest eingeklemmte Membran eine unerwünscht hohe dynamische Steifigkeit und eine frei beweglich angeordnete Membran eine sehr niedrige Dämpfung von fahrbahnerregten Schwingungen zeigt.

### Darstellung der Erfindung

Der Erfindung liegt daher die Aufgabe zugrunde, ein Hydrolager der eingangs genannten Art derart auszugestalten und weiterzubilden, dass die Membran eine geringe dynamische Steifigkeit aufweist und eine hohe Dämpfung von fahrbahnerregten Schwingungen bewirkt.

Die vorliegende Erfindung löst die zuvor genannte Aufgabe durch die Merkmale des Patentanspruchs 1. Bei dem Hydrolager nach der Erfindung wird die auf Membran wirkende Kraft zumindest teilweise derart umgeleitet, dass die Membran zumindest bereichsweise druckschubbelastet ist.

Erfindungsgemäß ist zunächst erkannt worden, dass die gattungsbildenden Hydrolager in konstruktiver Hinsicht wenig gebrauchstauglich ausgebildet sind. In einem nächsten Schritt ist sodann erkannt worden, dass die Nachteile der gattungsbildenden Hydrolager durch die Struktur der Membran begründet sind. Dann ist erkannt worden, dass die Membran bei im Wesentlichen orthogonaler Kraftbeaufschlagung der Membranoberfläche durch ein Fluid ein hohes Maß an Nachgiebigkeit zeigen muss. Insbesondere ist erkannt worden, dass sich die Membran durch eine geringe dynamische Steifigkeit auszeichnen muss. Schließlich ist erkannt worden, dass dies durch die Vorkehrung von Mitteln erzielt werden kann, welche eine im Wesentlichen orthogonal angreifende Kraft in den Membrankörper derart umleitet, dass der Membrankörper auf Druckschub beansprucht wird. Hierdurch wird ein großer Teil der Kraft innerhalb des Membrankörpers aufgenommen und die Schwingungsenergie in Verformungsenergie der Membran umgewandelt. Des Weiteren ist erfindungsgemäß erkannt worden, dass eine druckschubbelastbare Membran problemios auslenkbar und deformierbar ist. Insoweit ist eine Membran angegeben, welche eine geringe dynamische Steifigkeit auf Grund ihrer leichten Deformierbarkeit aufweist. Eine Membran dieser Art ermöglicht eine hohe Dämpfung von fahrbahnerregten Schwingungen. Folglich ist die eingangs genannte Aufgabe gelöst

Die Membran ist kreisförmig ausgebildet und die Mittel sind konzentrisch angeordnet. Diese konkrete Ausgestaltung erlaubt eine Positionierung in einem zylinderförmig ausgestalteten Hydrolager. Die konzentrische Anordnung stellt sicher, dass die Membran über ihre gesamte Oberfläche bzw. über den gesamten Membrankörper gleichmäßig deformierbar ist.

Die Membran ist im Querschnitt wellenförmig ausgebildet und hat eine wellenförmige Oberfläche. Die wellenförmige Ausgestaltung bewirkt eine problemlose Deformierbarkeit der Membran im eingeklemmten Zustand.

Die Membran weist einen Randbereich auf, der zwischen den Scheiben eingeklemmt ist. Die Ausbildung eines Randbereiches erlaubt die Festlegung, nämlich das Einklemmen der Membran zwischen zwei Scheiben. Vor diesem Hintergrund ist ganz konkret denkbar, dass die Membran zwischen zwei Düsenscheiben eingeklemmt wird. Düsenscheiben weisen Ausnehmungen auf, durch welche das Fluid durchtreten und mit der Membranoberfläche in Kontakt treten kann. Durch das durchtretende Fluid wird die Membranoberfläche mit Kraft beaufschlagt und lenkt diese aus oder bewegt diese.

Die Membran kann in ihrem Zentrum einen Durchgang aufweisen. Die Ausbildung eines Durchgangs erlaubt die Festlegung der Membran in ihrem Zentrum, wenn nämlich durch den Durchgang ein Flansch hindurch gesteckt wird. Des Weiteren kann der Durchgang den Durchtritt des Fluids durch die Membran erlauben, ohne dass die Membran im Bereich des Durchgangs ausgelenkt wird und eine dämpfende Funktion entfalten kann. Durch die Dimensionierung des Durchgangs ist die dämpfende Wirkung bzw. die dynamische Steifigkeit der Membran einstellbar.

Vor diesem Hintergrund ist denkbar, dass dem Durchgang ein Randbereich zugeordnet ist. Die Ausbildung eines Randbereichs im Zentrum erlaubt das Einklemmen der Membran in ihrem Zentrum. Hierdurch können die dynamische Steifigkeit und das Dämpfungsverhalten der Membran zusätzlich beeinflusst werden, da hierdurch eine kreisringförmige Mambran geschaffen wird, die an ihrem äußeren Umfang und inneren Umfang festgelegt ist. Diese kreisringförmige Membran könnte fluiddicht sein.

Die Membran könnte aus einem Elastomer gefertigt sein. Vor diesem Hintergrund ist ganz konkret denkbar, dass die Membran aus Gummi gefertigt ist. Gummi zeigt eine hohe chemische Resistenz gegen die in Hydrolagern verwendeten Fluide.

Ein Welle kann sich im Querschnitt über 1,5 mm erstrecken und die Membran könnte bei einem Durchmesser von 62 mm eine Dicke von 2,5 mm aufweisen. Diese konkrete Ausgestaltung hat sich als besonders vorteilhaft erwiesen, wenn die Membran mit einer Anregungsamplitude von 0,2 mm zu Schwingungen angeregt wird. Überraschenderweise stellt sich bei dieser konkreten Dimensionierung ein sehr hoher Verlustwinkel bei einer Anregungsamplitude von 0,2 mm ein. Überraschenderweise zeigt sich bei einer Anregungsamplitude von 0,1 mm eine niedrige dynamische Steifigkeit, wenn die Membran die hier beschriebene Dimensionierung aufweist.

Es gibt nun verschiedene Möglichkeiten die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels des erfindungsgemäßen Hydrolagers anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: in einer schematischen Ansicht ein Hydrolager mit einer Membran, welche zwischen zwei Düsenscheiben eingeklemmt ist,
- Fig. 2: eine Membran in perspektivischer Ansicht,
- Fig.3: eine Draufsicht auf die Membran gemäß Fig. 2 und
- Fig. 4: eine Schnittansicht der Membran gemäß Fig. 2 und 3 entlang der Linie A - A aus Fig. 3.

### Ausführung der Erfindung

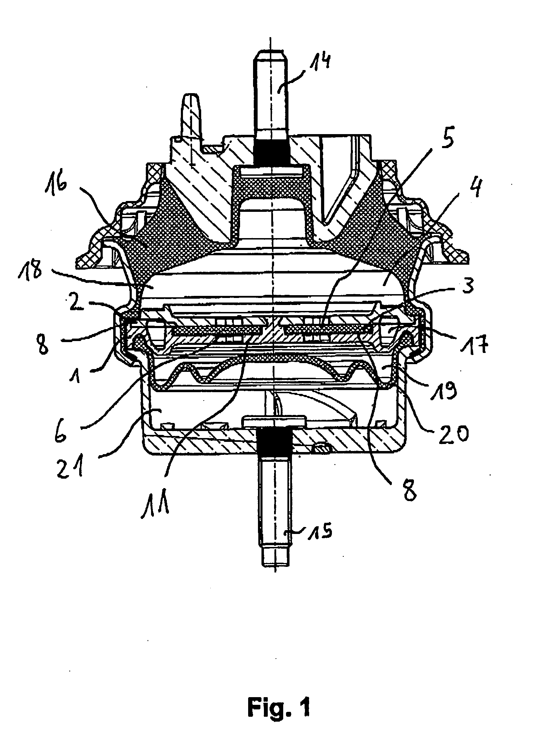

Fig. 1 zeigt ein Hydrolager, weiches zwei Scheiben 1 und 2 aufweist, zwischen denen eine Membran 3 eingeklemmt ist. Die Scheiben 1 und 2 sind als Düsenscheiben mit Ausnehmungen ausgestaltet, welche den Durchtritt des Fluids 4 durch die Düsenscheiben auf die Membranoberfläche 5 erlauben. Die Membranoberfläche 5 ist durch das Fluid 4 mit Kraft beaufschlagbar. Durch diese Kraftbeaufschlagung wird die Membran 3 zumindest bereichsweise aus ihrer Ruhelage ausgelenkt oder als ganzes bewegt. Die Membran 3 weist Mittel 6 auf, welche die Kraft zumindest teilweise derart umleiten, dass die Membran 3 zumindest bereichsweise durchschubbelastet ist.

Das Hydrolager gemäß Fig. 1 dient der Trennung von Schwingungen eines Motors von der Karosserie. Hierzu sind dem Hydrolager zwei Befestigungseinrichtungen 14 und 15 zugeordnet, welche an der Karosserie bzw. am Motor eines Kraftfahrzeugs festlegbar sind. Das Hydrolager weist des Weiteren einen Elastomerkörper 16 auf, welcher beim Auftreten von Schwingungen eine relative Bewegung der Befestigungseinrichtungen 14 und 15 zueinander erlaubt. Das Hydrolager weist auch einen Dämpfungskanal 17 auf, durch welchen das Fluid 4 hindurchtreten kann. Der Dämpfungskanal 17 wird zwischen den Düsenscheiben 1 und 2 ausgebildet. Von einer ersten Kammer 18 kann das Fluid 4 durch den Dämpfungskanal 17 in eine zweite Kammer 19 eintreten, welche durch eine Membran 20 von einer dritten Kammer 21 abgetrennt ist. Die Membran 20 wird beim Eindringen von Fluid 4 aus der ersten Kammer 18 deformiert und bewirkt ebenfalls eine Dämpfung.

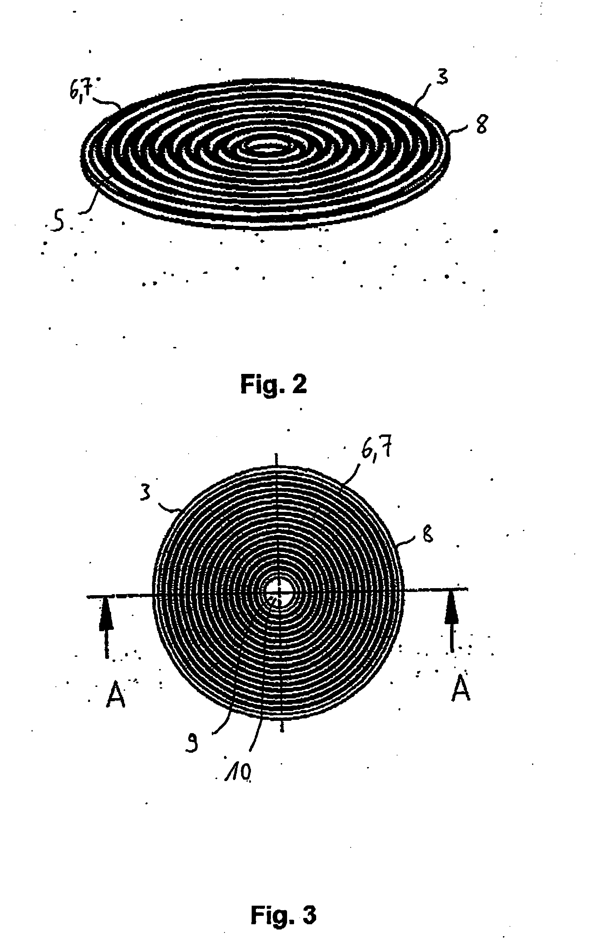

Fig. 2 zeigt die Membran 3, welche im Hydrolager gemäß Fig. 1 zwischen den Düsenscheiben 1 und 2 positioniert ist. Die Mittel 6 sind als Wülste 7 ausgebildet. Die Wülste 7 sind aus der Membran herausgebildet und mit dieser materialeinheitlich und einstückig ausgebildet. Die Membran 3 ist kreisringförmig ausgebildet, wobei die Mittel 6 bzw. die Wülste 7 konzentrisch angeordnet sind. die Membran 3 ist im Querschnitt wellenförmig ausgebildet und weist eine wellenförmige Oberfläche 5 auf.

Fig. 3 zeigt eine Draufsicht auf die Membran 3. Die Membran 3 weist in ihrem Zentrum 9 einen Durchgang 10 auf. Durch diesen Durchgang 10 können Fluide hindurchtreten. Des Weiteren kann der Durchgang 10 eine Befestigungseinrichtung aufnehmen, welche die Membran 3 in ihrem Zentrum 9 festklemmt. Die Membran 3 ist aus einem Elastomer, nämlich Gummi,gefertigt. Die Membran 3 gemäß Fig. 1 und Fig. 2 weist einen Randbereich 8 auf, der zwischen den Scheiben 1, 2 eingeklemmt ist. Beim Einklemmen der Membran 3 zwischen den Scheiben 1, 2 wird die Membran 3 in ihrer Dicke um 1/10 mm komprimiert.

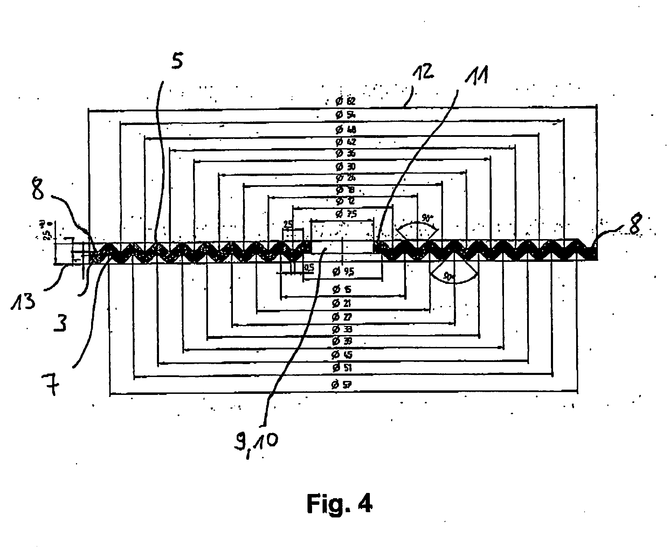

Fig. 4 zeigt in einer Querschnittsansicht die Membran 3 gemäß den Figuren 1 bis 3. Ganz konkret zeigt Fig. 4 die Membran 3 in einer Querschnittsansicht entlang der Linie A-A gemäß Fig. 3. Fig. 4 zeigt die Membran 3, welche einen Randbereich 8 aufweist, der zwischen den Düsenscheiben 1, 2 einklemmbar ist. Des Weiteren zeigt Fig. 4, dass im Zentrum 9 der Membran 3 ein Durchgang 10 angeordnet ist. Aus Fig. 4 erkennt man auch, dass die Wülste 7 im Querschnitt rechtwinklig zueinander angeordnet sind. Ein Wulst 7 erstreckt sich über 1,5 mm im Querschnitt. Die Membran 3 weist einen Durchmesser 12 von 62 mm und eine Dicke von 2,5 mm auf. Dem Durchgang 10 ist ein Randbereich 11 zugeordnet. Dieser Randbereich 11 kann in einer Befestigungseinrichtung oder einem Flansch eingeklemmt werden. Insoweit ist die Membran 3 sowohl im Randbereich 8 als auch am Randbereich 11 zwischen zwei Scheiben 1, 2 einklemmbar. Aus ist Fig. 4 ist des Weiteren ersichtlich, dass die Membran 3 im Querschnitt wellenförmig ausgebildet ist und eine wellenförmige Oberfläche 5 aufweist.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor rein willkürlich ausgewählte Ausführungsbeispiel lediglich zur Erörterung der erfindungsgemäßen Lehre dient, diese jedoch nicht auf dieses Ausführungsbeispiel einschränkt.

## Patentansprüche

1. Hydrolager zur Verwendung bei Kraftfahrzeugen mit einer Elastomerfeder (16) sowie einer ersten Kammer (18) und einer zweiten Kammer (19), die mit einem Fluid gefüllt durch eine aus zwei Düsenscheiben (1, 2) bestehende Trennwand mit einem Dämpfungskanal (17) getrennt sind, wobei zwischen die Düsenscheiben (1, 2) eine wellige elastische Membran (3) positioniert ist, **dadurch gekennzeichnet, dass** die Membran (3) kreisförmig oder kreisringförmig ausgebildet , mit wenigstens ihrem äußeren Randbereich (8) zwischen den Düsenscheiben (1, 2) eingeklemmt ist, und die Wellenform der Membran (3) konzentrisch angeordnet und die Wellen (7) im Querschnitt rechtwinkelig zueinander verlaufen.

2. Hydrolager nach Anspruch 1, **dadurch gekennzeichnet, dass** die Membran (3) in ihrem Zentrum (9) einen Durchgang (10) aufweist, dem ein Randbereich (11) zugeordnet ist.

3. Hydrolager nach einem der Ansprüche 1 oder 2, **dadurch gekennzeichnet, dass** die Welle (7) im Querschnitt eine Dicke von 1,5 mm hat und die Membran (3) bei einem Durchmesser (12) von 62 mm eine Dicke (13) von 2,5 mm aufweist.

## Claims

1. Hydraulic bearing in motor vehicles having an elastomer spring (16) and a first chamber (18) and a second chamber (19) which, filled with a fluid, are separated by a dividing wall which comprises two nozzle discs (1, 2) and has a damping channel (17), an undulating elastic diaphragm (3) being positioned between the nozzle discs (1, 2), **characterized in that** the diaphragm (3) is of circular or circularly annular configuration, is clamped by way of its outer edge region (8) between the nozzle discs (1, 2), and the undulating shape of the diaphragm (3) is arranged concentrically and the waves (7) extend at right angles to one another in cross section.

2. Hydraulic bearing according to Claim 1, **characterized in that**, in its centre (9), the diaphragm (3) has a passage (10) which is assigned an edge region (11).

3. Hydraulic bearing according to either of Claims 1 and 2, **characterized in that** the shaft (7) has a thickness of 1.5 mm in cross section and, with a diameter (12) of 62 mm, the diaphragm (3) has a thickness (13) of 2.5 mm.

## Revendications

1. Palier hydraulique pour l'utilisation dans des véhicules automobiles, comprenant un ressort élastomère (16) ainsi qu'une première chambre (7.8) et une deuxième chambre (19), qui sont remplies d'un fluide, et qui sont séparées par une paroi de séparation constituée de deux disques de buse (1, 2) avec un canal d'amortissement (17), une membrane élastique ondulée (3) étant positionnée entre les disques de buse (1, 2), **caractérisé en ce que** la membrane (3) est réalisée en forme de cercle ou d'anneau circulaire, est serrée avec au moins sa région de bord extérieure (8) entre les disques de buse (1, 2), et la forme ondulée de la membrane (3) est disposée concentriquement et les ondulations (7) s'étendent les unes par rapport aux autres à angle droit en section transversale.

2. Palier hydraulique selon la revendication 1, **caractérisé en ce que** la membrane (3) présente en son centre (9) un passage (10) auquel est associée une région de bord (11).

3. Palier hydraulique selon l'une quelconque des revendications 1 ou 2, **caractérisé en ce que** l'ondulation (7) présente, en section transversale, une épaisseur de 1,5 mm et la
membrane (3), pour un diamètre (12) de 62 mm, présente une épaisseur (13) de 2,5 mm.
